# EUROPEAN PATENT APPLICATION

(11) **EP 4 481 562 A1**
(43) Date of publication of application: **25.12.2024**
(21) Application number: 22933217.6
(22) Date of filing: 30.12.2022
(51) Int. Cl.: G06F 9/445

(54) **INSTANCE CONFIGURATION METHOD AND APPARATUS, AND DEVICE**

(30) Priority: 24.03.2022 CN 202210303636; 23.05.2022 CN 202210567561
(71) Applicant: Huawei Cloud Computing Technologies Co., Ltd., Gui'an New District, Guizhou 550025 (CN)
(72) Inventor: SHAN, Chuang, Guizhou 550025 (CN); YU, Zhou, Guizhou 550025 (CN)
(74) Representative: Körber, Martin Hans
(86) International application number: PCT/CN2022/144278
(87) International publication number: WO 2023/179170

(57) **Abstract**

An instance configuration method and apparatus, and a device are provided. In this application, the instance configuration apparatus receives, through a configuration port, a creation request triggered by a user, where the creation request includes a specification of a computing instance and a core allocation strategy of the computing instance, the specification of the computing instance indicates a total quantity of cores included in the computing instance, and the core allocation strategy indicates a type of a core included in the computing instance; and after obtaining the creation request, configures the computing instance based on the specification of the computing instance and according to the core allocation strategy of the computing instance. The instance configuration apparatus can configure, for the computing instance based on the total quantity of cores that is indicated by the specification of the computing instance, cores that satisfy the total quantity, and types of the cores configured for the computing instance satisfy the core allocation strategy. In this way, the computing instance is allowed to include cores of different types, a computing capability of the computing instance is no longer only limited by the quantity of cores, and the computing capability of the computing instance changes with the included cores of different types. This is applicable to an application scenario in which a requirement on the computing capability of the computing instance changes greatly.

## Description

### CROSS-REFERENCE TO RELATED APPLICATIONS

This application claims priority to Chinese Patent Application No. 202210303636.8, filed with the China National Intellectual Property Administration on March 24, 2022 and entitled "COMPUTING RESOURCE MANAGEMENT METHOD AND SYSTEM, AND DEVICE", which is incorporated herein by reference in its entirety. This application claims priority to Chinese Patent Application No. 202210567561.4, filed with the China National Intellectual Property Administration on May 23, 2022 and entitled "INSTANCE CONFIGURATION METHOD AND APPARATUS, AND DEVICE", which is incorporated herein by reference in its entirety.

### TECHNICAL FIELD

This application relates to the field of communication technologies, and in particular, to an instance configuration method and apparatus, and a device.

### BACKGROUND

With emergence of a cloud data center, a user is enabled to rent resources from the cloud data center, to create a computing instance of the user on a "cloud". The user deploys a task for the computing instance, to meet various computing requirements. A resource occupied by the computing instance is actually a resource of a server in the cloud data center. For example, a processor of the computing instance is a processor in the server, and a core of the processor of the computing instance is a core of the processor in the server.

The cloud data center includes a plurality of servers. Computing capabilities of cores in processors of the servers are usually consistent. In other words, types of the cores in the processors of the servers are the same. Therefore, once the computing instance is created, a quantity of cores of the computing instance does not change. Therefore, a computing capability provided by the cores of the computing instance for the computing instance is always unchanged.

### SUMMARY

This application provides an instance configuration method and apparatus, and a device, to configure a computing instance in a scenario in which a computing device includes a plurality of cores of different types.

According to a first aspect, an embodiment of this application provides an instance configuration method. The instance configuration method may be performed by an instance configuration apparatus. The instance configuration apparatus may provide a configuration port, to implement some user-oriented configuration functions. In this application, the configuration port can receive a creation request triggered by a user. The creation request includes a specification of a computing instance and a core allocation strategy of the computing instance. The specification of the computing instance describes a resource that needs to be occupied by the computing instance. For example, the specification of the computing instance may indicate a total quantity of cores included in the computing instance. The core allocation strategy of the computing instance indicates a type of a core included in the computing instance. In this application, the total quantity of cores included in the computing instance is a total quantity of virtual processors in the computing instance. One virtual processor may be one physical core on a processor in a computing device, or may be one hyper-thread on one physical core in a computing device. Therefore, one virtual processor always has a mapping relationship with one physical core. The type of the core included in the computing instance is a type of a physical core that is in the computing instance and that has a mapping relationship with a virtual processor. In addition, the mapping relationship between the virtual processor and the physical core also changes with a change of a physical core occupied by the computing instance.

After obtaining the creation request, the instance configuration apparatus configures the computing instance based on the specification of the computing instance and according to the core allocation strategy of the computing instance. For example, the instance configuration apparatus may configure, for the computing instance based on the total quantity of cores that is indicated by the specification of the computing instance, cores that satisfy the total quantity, and types of the cores configured for the computing instance satisfy the core allocation strategy.

According to the foregoing method, in a scenario in which a plurality of cores of different types exist on the computing device, the creation request received by the instance configuration apparatus carries the core allocation strategy, and the instance configuration apparatus can configure cores of one or more types for the computing instance according to the indication of the core allocation strategy. In this manner, the computing instance is allowed to include cores of different types, so that a computing capability of the computing instance is no longer only limited by the quantity of cores, and the computing capability of the computing instance changes with the included cores of different types. This is applicable to an application scenario in which a requirement on the computing capability of the computing instance changes greatly.

In a possible implementation, the computing instance is allowed to include the cores of one or more types. When the computing instance that needs to be created needs to include cores of a plurality of types, the core allocation strategy may indicate a quantity of cores of each of the plurality of types or a first ratio.

According to the foregoing method, the user is allowed to configure the types of the cores included in the computing instance and quantities of cores of various types, so that the configured computing instance can better meet a requirement of the user, and user experience is improved.

In a possible implementation, when the core allocation strategy indicates that the computing instance includes cores of the plurality of types, and the instance configuration apparatus configures the computing instance based on the specification of the computing instance and according to the core allocation strategy of the computing instance, if the core allocation strategy indicates the quantity of cores of each of the plurality of types or the first ratio, the instance configuration apparatus may configure the computing instance based on the quantity of cores of each type or the first ratio indicated by the core allocation strategy. If the core allocation strategy does not indicate the quantity of cores of each of the plurality of types or the first ratio, or the core allocation strategy indicates the quantity of cores of each of the plurality of types or the first ratio, and the quantity of cores of each type or the first ratio is allowed to change, the instance configuration apparatus may configure the computing instance based on the first ratio or the quantity of cores of each type indicated by the core allocation strategy. In a running process of the computing instance, the instance configuration apparatus may change the quantity of cores of each type included in the computing instance or a ratio of the cores of the types included in the computing instance. For example, the instance configuration apparatus may configure the computing instance based on a second ratio different from the first ratio.

According to the foregoing method, when the computing instance includes cores of the plurality of types, the instance configuration apparatus configures the computing instance in a plurality of manners. The manners of configuring the computing instance are more flexible and applicable to different application scenarios.

In a possible implementation, after determining the specification of the computing instance and the core allocation strategy of the computing instance selected by the user for the computing instance that needs to be created (for example, after the instance configuration apparatus receives the creation request or the instance configuration apparatus detects, through the configuration port, a selection operation performed by the user on the specification of the computing instance and the core allocation strategy of the computing instance), the instance configuration apparatus may compute a price of a compute instance based on the specification of the computing instance and according to the core allocation strategy of the compute instance, and display the price to the user through the configuration port.

When determining the specification of the computing instance selected by the user for the computing instance that needs to be created (for example, the instance configuration apparatus detects, through the configuration port, a selection operation performed by the user on the specification of the computing instance), the instance configuration apparatus may compute prices of the computing instance under different core allocation strategies based on the specification of the computing instance, and display, to the user through the configuration port, the prices of the computing instance under the different core allocation strategies.

When determining the core allocation strategy selected by the user for the computing instance that needs to be created (for example, the instance configuration apparatus detects, through the configuration port, a selection operation performed by the user on the core allocation strategy), the instance configuration apparatus may compute prices of the computing instance under different specifications of the computing instance according to the core allocation strategy, and display, to the user through the configuration port, the prices of the computing instance under the different specifications of the computing instance.

According to the foregoing method, the instance configuration apparatus can display the price of the computing instance to the user, so that the user can accurately and timely learn a fee that needs to be paid by the user.

In a possible implementation, after completing configuring the computing instance, the instance configuration apparatus may further display a configuration sheet to the user through the configuration port. The configuration sheet includes the types of the cores included in the computing instance and the quantity of cores of each type.

According to the foregoing method, the instance configuration apparatus displays the configuration sheet to the user, so that the user can further determine information about the core included in the computing instance that is requested to be created.

According to a second aspect, an embodiment of this application further provides an instance configuration apparatus. The instance configuration apparatus has a function of implementing behaviors in the method embodiments in the first aspect. For beneficial effects, refer to the descriptions of the first aspect. Details are not described herein again. The function may be implemented by hardware, or may be implemented by hardware executing corresponding software. The hardware or software includes one or more modules corresponding to the foregoing function. In a possible design, a structure of the apparatus includes a configuration port and a processing unit, and optionally, may further include a display unit. These units may perform corresponding functions in the method embodiments in the first aspect. For details, refer to the detailed descriptions in the method embodiments. Details are not described herein again.

According to a third aspect, an embodiment of this application further provides a computing device. The device has a function of implementing behavior of the instance configuration apparatus in the method embodiments in the first aspect. For beneficial effects, refer to the descriptions of the first aspect. Details are not described herein again. A structure of the computing device includes a processor and a memory. The processor is configured to support the instance configuration apparatus in performing a corresponding function in the method in the first aspect. The memory is coupled to the processor, and stores program instructions and data that are necessary for the computing device. The structure of the computing device further includes a communication port, configured to communicate with another device.

According to a fourth aspect, this application further provides a computer-readable storage medium. The computer-readable storage medium stores instructions. When the instructions are run on a computer, the computer is enabled to perform the method according to any one of the first aspect and the possible designs of the first aspect.

According to a fifth aspect, this application further provides a computer program product including instructions. When the computer program product runs on a computer, the computer is enabled to perform the method according to any one of the first aspect and the possible designs of the first aspect.

According to a sixth aspect, this application further provides a computer chip. The chip is connected to a memory, and the chip is configured to: read and execute a software program stored in the memory, to perform the method according to any one of the first aspect and the possible implementations of the first aspect.

### BRIEF DESCRIPTION OF DRAWINGS

FIG. 1 is a diagram of a structure of a computing device according to this application;
FIG. 2 is a diagram of another structure of a computing device according to this application;
FIG. 3 is a diagram of a computing instance according to this application;
FIG. 4 is a diagram of an instance configuration method according to this application;
FIG. 5A to FIG. 5C are diagrams of configuration interfaces according to this application;
FIG. 6 is a diagram of another configuration interface according to this application;
FIG. 7 is a diagram of a configuration sheet according to this application; and
FIG. 8 is a diagram of a structure of an instance configuration apparatus according to this application.

### DESCRIPTION OF EMBODIMENTS

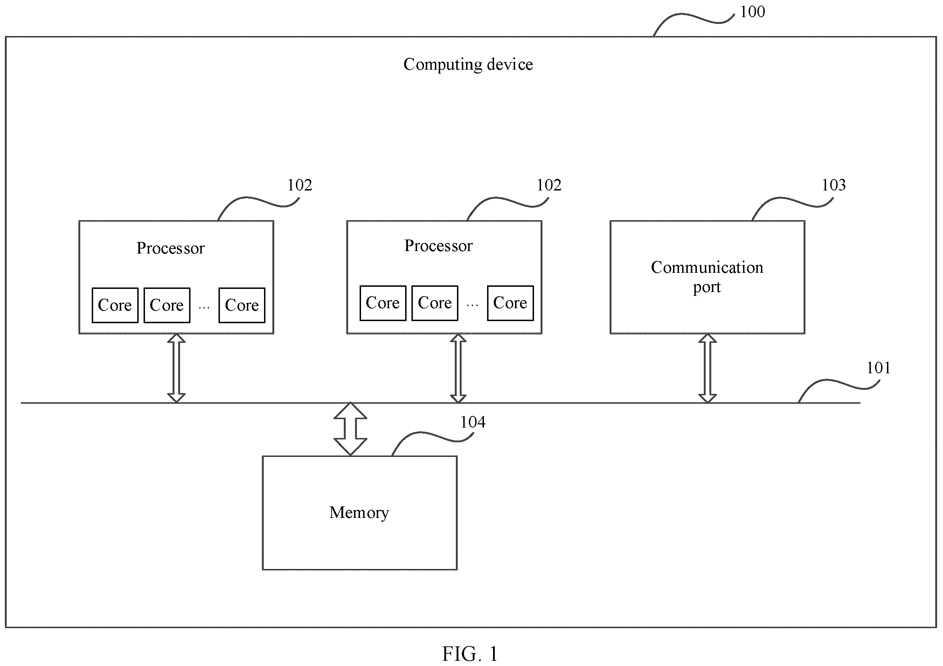

FIG. 1 is a diagram of a structure of a computing device according to an embodiment of this application. The computing device 100 includes a bus 101, a processor 102, a communication port 103, and a memory 104. The processor 102, the memory 104, and the communication port 103 communicate with each other through the bus 101.

The processor 102 may be a general-purpose processor, for example, a central processing unit (central processing unit, CPU), or a combination of a CPU and a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof.

A quantity of processors 102 on the computing device 100 is not limited in embodiments of this application. The computing device 100 may include one processor 102, or may include a plurality of processors 102.

For any processor 102, the processor 102 may include one or more cores (cores). The core is a main unit that undertakes a computing function in the processor 102. When one processor 102 includes a plurality of cores, the plurality of cores may be cores of a same type, or may be cores of different types. In embodiments of this application, a type of a core is mainly determined based on a computing capability of the core. Cores with a same computing capability are cores of a same type, and cores with different computing capabilities are cores of different types. Types of cores included in different processors 102 may be the same or may be different. In embodiments of this application, there are cores of at least two types in all cores of the computing device 100.

It should be noted that a main difference between cores of different types in embodiments of this application lies in that the cores have different computing capabilities. Actually, when the cores of different types are distinguished, a factor other than the computing capabilities of the cores may also be considered. For example, the cores of different types may be distinguished based on an area of a core, or the cores of different types may be distinguished based on a material of a core.

The memory 104 may include a volatile memory (volatile memory), for example, a random access memory (random access memory, RAM). The memory 104 may further include a non-volatile memory (non-volatile memory, NVM), for example, a read-only memory (read-only memory, ROM), a flash memory, a hard disk drive (hard disk drive, HDD), or a solid-state drive (solid-state drive, SSD). The memory 104 may further include a combination of the foregoing types.

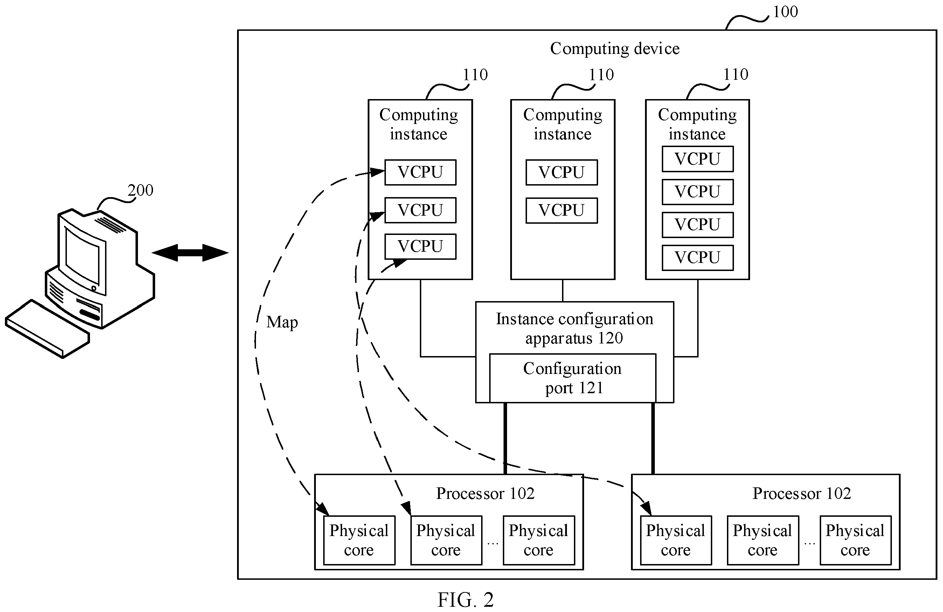

FIG. 2 is a diagram of another structure of the computing device according to an embodiment of this application. FIG. 2 is a diagram of a structure of the computing device 100 obtained by dividing the computing device 100 from a logical perspective. One or more computing instances 110 are allowed to be deployed on the computing device 100, and the computing device 100 further includes an instance configuration apparatus 120. The instance configuration apparatus 120 includes a configuration port 121.

On the computing device 100, virtualization may be implemented based on a hardware component of the computing device 100. Through virtualization, the computing instance 110 is allowed to be deployed on the computing device 100. The computing instance 110 may be a virtual machine, or may be a container, or may be another logical module formed through virtualization based on the hardware component on the computing device 100.

The computing device 100 may provide a resource for the computing instance 110 deployed on the computing device 100. By occupying a physical resource of the computing device 100, the computing instance 110 may construct a running environment of the computing instance 110, run an operating system of the computing instance 110, and complete a task that needs to be executed by the computing instance 110. The physical resource (for example, a processor, a memory, or a communication port) on the computing device 100 may be converted into some virtual resources in a virtualization manner, so that the virtual resources are used by the computing instance 110. In other words, there is a correspondence between the physical resource and the virtual resource. For example, the processor 102 of the computing device 100 may be virtualized into one or more virtual processors (virtual central processing units, VCPUs). Any computing instance 110 on the computing device 100 may occupy a VCPU to complete an operation. One VCPU actually corresponds to a part of computing resources of the processor of the computing device 100. The memory 104 of the computing device 100 may be virtualized into one or more virtual memories (the virtual memory includes a memory of the computing instance 110). Any computing instance 110 on the computing device 100 may occupy the virtual memory, to implement data storage, and cooperate with the VCPU to complete an operation. The virtual memory is actually a part of the physical memory of the computing device 100.

Specifically, for virtualization at a granularity of the core of the processor, when the processor 102 of the computing device 100 supports a hyper-thread, for example, one core of the processor 102 can support two or more hyper-threads, that is, the processor 102 supports thread-level parallel computing, one hyper-thread on the core of the processor 102 of the computing device 100 may be virtualized into one virtual processor. The computing instance 110 completes an operation based on the hyper-thread. The virtual processor actually corresponds to one hyper-thread on one core of the processor 102 of the computing device 100. In other words, one virtual processor is one hyper-thread.

For example, the processor 102 may support two hyper-threads. When it is required that a computing instance includes four virtual processors, the four virtual processors are four hyper-threads. The four virtual processors may be associated with two cores of the processor 102, and two hyper-threads of each of the two cores are virtualized into two virtual processors. The four virtual processors may be associated with four cores of the processor 102, and one hyper-thread of each of the four cores is virtualized into one virtual processor. It can be learned that no matter whether the four virtual processors are associated with the two cores of the processor 102 or the four virtual processors are associated with the four cores of the processor 102, a mapping relationship always exists between the virtual processors and the cores in the processor 102.

When the processor 102 of the computing device 100 does not support a hyper-thread, one core of the processor 102 of the computing device 100 may be virtualized into one virtual processor. The computing instance 110 completes an operation based on the core. The virtual processor actually corresponds to one core of the processor 102 of the computing device 100. In other words, one virtual processor is one core of the processor 102.

It can be learned that virtualization at a granularity of the core may enable a core of the processor 102 of the computing device 100 to be virtualized as a virtual processor of the computing instance 110, and a mapping relationship exists between the core of the processor 102 and the virtual processor. In embodiments of this application, for ease of description, a core of a processor is referred to as a physical core.

It should be noted that, because there is a mapping relationship between the physical core of the computing device 100 and the virtual processor of the computing instance 110, a total quantity of cores included in the computing instance 110 in embodiments of this application refers to a quantity of virtual processors in the computing instance 110. When an attribute of the processor 102 on the computing device 100 is different, content indicated by the virtual processor is also different. For example, the virtual processor may indicate a hyper-thread of a physical core, or may indicate a physical core. The mapping relationship between the physical core of the processor 102 and the virtual processor does not necessarily remain unchanged. When a configuration of the computing instance changes, for example, the physical core occupied by the computing instance changes, the mapping relationship between the physical core of the processor 102 and the virtual processor also changes.

To deploy the computing instance 110 on the computing device 100, the instance configuration apparatus 120 may provide a configuration port 121 externally. The configuration port 121 may be understood as a function module on the computing device 100, and the configuration port 121 can provide some user-oriented functions. In embodiments of this application, the configuration port 121 can provide, for a user, a configuration function for the computing instance 110. The configuration function allows the user to configure a specification and a core allocation strategy for the computing instance 110.

The specification of the computing instance 110 is used to describe a resource that needs to be occupied by the computing instance 110. For example, the specification of the computing instance 110 may indicate a total quantity of cores included in the computing instance 110, and may further indicate a size of a memory included in the computing instance 110.

The core allocation strategy is used to describe a type of the core included in the computing instance 110. For example, the core allocation strategy may indicate that the computing instance 110 includes cores of one or more types, and may further indicate a quantity of cores of each type included in the computing instance 110 or a ratio of the cores of the types included in the computing instance 110.

The configuration port 121 receives a creation request of the user by providing, for the user, a configuration function for the computing instance 110, where the creation request includes the specification of the computing instance 110 and the core allocation strategy of the computing instance 110. The specification of the computing instance 110 and the core allocation strategy of the computing instance 110 are configured by the user through the configuration port 121.

When the computing device 100 is deployed on a user side, the configuration port 121 may provide, for the user, the configuration function for the computing instance 110 via an input/output component (such as a touchscreen, a display, a keyboard, or a mouse) on the computing device 100. For example, the display of the computing device 100 may display a configuration interface, so that the user is enabled to configure the specification of the computing instance 110 and the core allocation strategy of the computing instance 110 through a mouse or a keyboard. After the user completes configuration of the specification of the computing instance 110 and the core allocation policy of the computing instance 110, the creation request is generated. The configuration port 121 may receive the creation request.

When a client 200 connected to the computing device 100 is deployed on the user side, the configuration port 121 may provide, for the user, a configuration function for the computing instance 110 via an input/output component (such as a touchscreen, a keyboard, or a mouse) on the client 200. FIG. 2 shows an example of the client 200 connected to the computing device 100. A display of the client 200 may display a configuration interface, so that the user configures the specification of the computing instance 110 and the core allocation strategy of the computing instance 110 through a mouse or a keyboard of the client 200. After the user completes configuration of the specification of the computing instance 110 and the computing instance 110 on the client 200, the client 200 generates the creation request. The configuration port 121 may receive the creation request.

Certainly, in addition to a manner of providing, for the user, the configuration function for the computing instance 110 mentioned in the foregoing examples, the configuration port 121 further supports another manner of providing the configuration function. For example, the configuration port 121 may support a form of a message like a voice message, a text message (for example, an SMS message), or an email, and allows the user to configure the specification of the computing instance 110 and the core allocation strategy of the computing instance 110 based on the form of the message like the voice message, the text message (for example, the SMS message), or the email. A specific manner in which the configuration port 121 provides, for the user, the configuration function for the computing instance 110 is not limited in embodiments of this application. Any manner in which the user is allowed to configure the specification of the computing instance 110 and the core allocation strategy of the computing instance 110 is applicable to embodiments of this application.

After receiving the creation request through the configuration port 121, the instance configuration apparatus 120 may configure the computing instance 110 based on the creation request (herein, configuring the computing instance 110 based on the creation request may alternatively be understood as creating the computing instance 110). After the computing instance 110 is configured, the instance configuration apparatus 120 may further maintain running of the computing instance 110. However, creation and running of the computing instance 110 cannot be performed without a physical resource of the computing device 100. In an initial phase in which the computing instance 110 is created, a physical resource that can be occupied by the computing instance 110 needs to be determined. In a running phase of the computing instance 110, the physical resource occupied by the computing instance 110 may be adjusted. In other words, no matter when the computing instance 110 is created or the computing instance 110 is run, a resource needs to be distributed to the computing instance 110. The resource herein includes but is not limited to a physical core of the processor 102 and storage space of a memory.

To implement resource distribution for the computing instance 110, the instance configuration apparatus 120 is configured to distribute a resource to the computing instance 110 in a process in which the computing instance 110 is created and a process in which the computing instance 110 is run. The distributed resource implements distribution of the physical core of the processor 102 and allocation of the storage space of the memory. In embodiments of this application, only distribution of the physical core is used as an example for description.

The instance configuration apparatus 120 may obtain information about a physical core of the computing device 100. For example, the instance configuration apparatus 120 may identify that there are physical cores of different types on the computing device 100, may further learn quantities of physical cores of different types, and may further learn quantities of physical cores of different types that are on the computing device 100 and that can be distributed to the computing instance 110. The instance configuration apparatus 120 may monitor occupation statuses of the physical cores of different types on the computing device 100. For example, if the instance configuration apparatus 120 determines occupied physical cores of different types on the computing device 100, the instance configuration apparatus 120 determines unoccupied physical cores of different types (that is, idle physical cores of different types) on the computing device 100.

The instance configuration apparatus 120 may further allocate, at a request of the user, a physical core to the computing instance 110 that the user requests to create. For example, after receiving the creation request of the user, the instance configuration apparatus 120 may configure the computing instance 110 based on the specification of the computing instance 110 and according to the core allocation strategy of the computing instance 110, and configure, for the computing instance 110, physical cores of one or more types that satisfy the specification of the computing instance 110 and the core allocation strategy of the computing instance 110.

In embodiments of this application, for ease of description, the specification of the computing instance 110 and the core allocation strategy of the computing instance 110 are used as two types of information for description. Actually, during an actual application, the core allocation strategy may be used as a part of the specification of the computing instance 110. For example, the specification of the computing instance 110 may indicate quantities of physical cores of different types that need to be occupied by the computing instance 110. For example, when configuring the specification of the computing instance 110, the user may directly configure the quantities of physical cores of different types that need to be occupied by the computing instance 110. Alternatively, when configuring the specification of the computing instance 110, the user may directly set a total quantity of cores of the computing instance 110 and a ratio of physical cores of different types that need to be occupied by the computing instance 110.

The instance configuration apparatus 120 may be understood as a software apparatus deployed on the computing device 100. For example, the instance configuration apparatus 120 may run in a core module that is on the computing device 100 and that implements a virtualization technology. For example, the instance configuration apparatus 120 may be used as a part of a hypervisor. For another example, the instance configuration apparatus 120 may be used as a part of a host operating system (host operating system, host OS) on the computing device 100.

In embodiments of this application, an example in which the physical cores on the computing device 100 include physical cores of two types is used for description. To facilitate distinguishing between the physical cores of two types in the processor 102, a physical core with a strong computing capability in the physical cores of two types may be referred to as a first physical core, and a physical core with a weak computing capability in the physical cores of two types may be referred to as a second physical core.

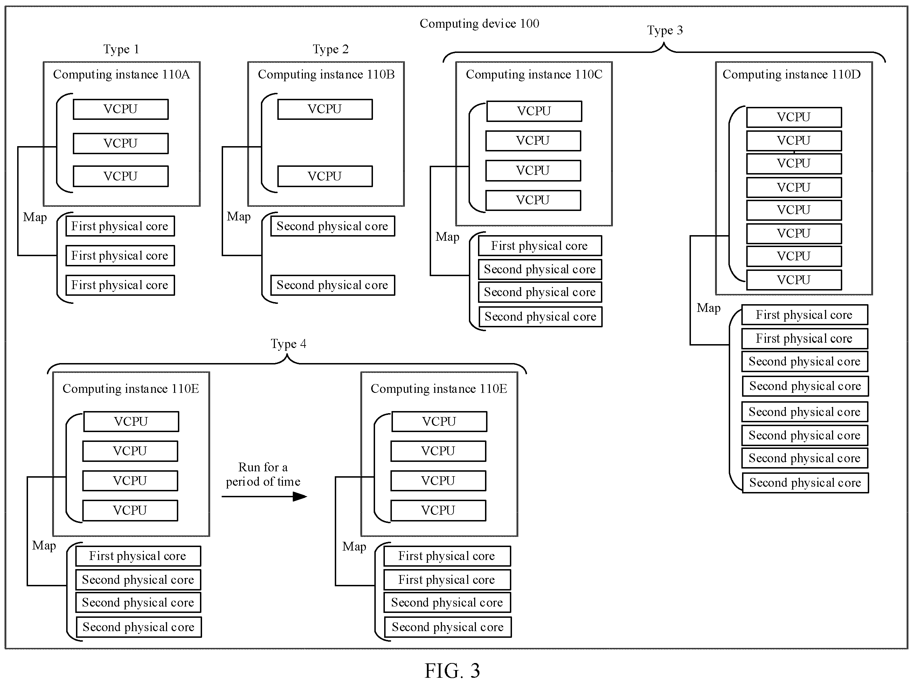

When the physical cores of the computing device 100 include physical cores of two types, as shown in FIG. 3, computing instances 110 of four types are allowed to be deployed on the computing device 100.

Type 1: All physical cores occupied by the computing instance 110 are first physical cores, for example, a computing instance 110A in FIG. 3. The computing instance 110A occupies three physical cores in total, and all the three physical cores are the first physical cores.

When the computing instance 110 of this type is created, the core allocation strategy carried in the creation request indicates that all the physical cores occupied by the computing instance 110 are the first physical cores.

Type 2: All physical cores occupied by the computing instance 110 are second physical cores, for example, a computing instance 110B in FIG. 3. The computing instance 110B occupies two second physical cores in total.

When the computing instance 110 of this type is created, the core allocation strategy carried in the creation request indicates that all the physical cores occupied by the computing instance 110 are the second physical cores.

Type 3: A ratio of a first physical core occupied by the computing instance 110 to a second physical core occupied by the computing instance 110 is a specified value, for example, a computing instance 110C and a computing instance 110D in FIG. 3. For example, the specified value is 1:3. The computing instance 110C occupies one first physical core and three second physical cores, and the computing instance 110D occupies two first physical cores and six second physical cores.

When the computing instance 110 of this type is created, the core allocation strategy carried in the creation request indicates that the ratio of the first physical core occupied by the computing instance 110 to the second physical core occupied by the computing instance 110 is equal to the specified value, for example, indicates that the ratio of the first physical core occupied by the computing instance 110 to the second physical core occupied by the computing instance 110 is equal to 1:3.

Type 4: A ratio of a first physical core occupied by the computing instance 110 to a second physical core occupied by the computing instance 110 is allowed to change, for example, a computing instance 110E in FIG. 3. After the computing instance 110E is created, the ratio of the first physical core occupied by the computing instance 110E to the second physical core occupied by the computing instance 110E is 1:3. The computing instance 110E occupies one first physical core and three second physical cores. After the computing instance 110E is run for a period of time, the ratio of the occupied first physical core to the occupied second physical core changes to 1:1. The computing instance 110E occupies two first physical cores and two second physical cores.

When the computing instance 110 of this type is created, the core allocation strategy carried in the creation request indicates that the ratio of the first physical core occupied by the computing instance 110 to the second physical core occupied by the computing instance 110 is allowed to change.

A type of the computing instance 110 in a scenario in which physical cores on the computing device 100 include physical cores of more than two types is similar to the type of the computing instance 110 in the scenario in which physical cores on the computing device 100 include physical cores of two types. A difference lies in that when types of physical cores on the computing device 100 increase, types of computing instances 110 that are allowed to be deployed on the computing device 100 increase, and content indicated by a corresponding core allocation strategy also changes.

Because there are a plurality of physical cores of different types on the computing device 100, manners in which the computing instance 110 deployed on the computing device 100 occupies the physical cores and types of the computing instance 110 also increase. In embodiments of this application, the instance configuration apparatus 120 may distribute a physical core to the computing instance 110 based on a user requirement. A physical core distribution manner is flexible. Resources of the computing device 100 can be effectively used by distributing the physical cores of different types to the computing instance 110, and resource utilization of the computing device 100 is improved.

An instance configuration method provided in an embodiment of this application is described below with reference to. The method includes the following steps.

Step 400: An instance configuration apparatus 120 monitors a physical core on a computing device 100, and determines information about the physical core on the computing device 100. The information about the physical core includes quantities of unoccupied physical cores of different types on the computing device 100.

When the computing device 100 is started, the computing device 100 may load bottom-layer software. For example, the bottom-layer software may be a basic input/output system (basic input/output system, BIOS). The computing device 100 completes self-check of each component (for example, a memory, a processor 102, and a port) of the computing device 100 by loading the bottom-layer software, to prepare for loading an operating system on the computing device 100. The bottom-layer software can obtain basic parameters of the computing device 100 in a running process. The basic parameters of the computing device 100 are mainly parameters of components on the computing device 100. The basic parameters of the computing device 100 include basic information of the physical core on the computing device 100.

The instance configuration apparatus 120 may obtain, from the bottom-layer software, the information about the physical core on the computing device 100, for example, a type of the physical core on the computing device 100, quantities of physical cores of different types, a computing capability of a physical core of each type, and the quantities of unoccupied physical cores of different types on the computing device 100.

It should be noted that, in a process of starting the computing device 100, some physical cores of the computing device 100 are used to maintain the operating system of the computing device 100. In other words, a host operating system of the computing device 100 may run on these physical cores. These physical cores are essentially occupied physical cores. The instance configuration apparatus 120 can determine, from the bottom-layer software, the occupied physical cores on the computing device 100.

After the computing device 100 is started, in a running process of the computing device 100, an occupation status of a physical core on the computing device 100 also changes. For example, when a new application or a computing instance 110 is deployed on the computing device 100, a physical core on the computing device 100 is occupied to run the new application or create the computing instance 110. The instance configuration apparatus 120 may monitor the occupation status of the physical core on the computing device 100 in the running process of the computing device 100, and obtain the information about the physical core on the computing device 100.

After the computing device 100 is started, as the computing device 100 runs, the information about the physical core on the computing device 100 changes. The instance configuration apparatus 120 can monitor the physical core on the computing device 100, and obtain the information about the physical core on the computing device 100 in real time.

Step 401: The instance configuration apparatus 120 receives a creation request of a user through a configuration port 121, where the creation request is used to request to create the computing instance 110, and the creation request carries a specification of the computing instance 110 and a core allocation strategy of the computing instance 110.

There are many manners in which the user triggers the creation request. For example, a client 200 may be deployed on a user side, and the user may establish a connection to the instance configuration apparatus 120 via the client 200. The user configures the specification of the computing instance 110 and the core allocation strategy of the computing instance 110 by performing an operation on the client 200.

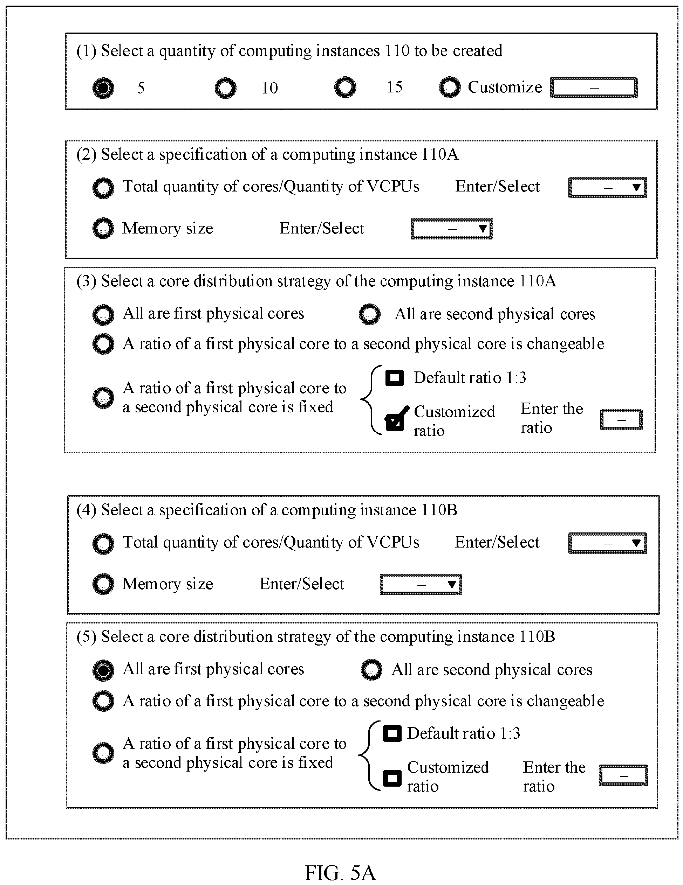

FIG. 5A is a diagram of a configuration interface of the computing instance 110 displayed by the client 200 to the user. The user may select, on the configuration interface of the computing instance 110, a quantity of computing instances 110 that need to be created, and a specification of each computing instance 110 (for example, select a total quantity of cores of a computing instance 110A and a size of a memory, and a total quantity of cores of a computing instance 110B and a size of a memory). Specifications of different computing instances 110 may be different. Therefore, the user may configure specifications of the computing instances 110 one by one. The user may also select a core allocation strategy. Different core distribution strategies may be displayed on the configuration interface of the computing instance 110 for the user to select.

When a core allocation strategy selected by the user is that a ratio of physical cores of two types occupied by the computing instance 110 is a specified value, the specified value may be a default value. In other words, the specified value cannot be set by the user. The specified value may alternatively be configured by the user. The specified value may be displayed in FIG. 5A.

The user selects the specification of the computing instance 110 and the core allocation strategy of the computing instance 110 on the configuration interface of the computing instance 110. The client 200 may generate the creation request by detecting an operation of the user, and send the generated creation request to the instance configuration apparatus 120.

The instance configuration apparatus 120 allows, through the configuration port 121, the user to configure the specification of the computing instance 110 and the core allocation strategy of the computing instance 110. When different specifications of the computing instance 110 or different core allocation strategies are selected, fees that need to be paid by the user for requesting to create the computing instance 110 may be different. In other words, prices of computing instances 110 with different specifications or different core allocation strategies are different. To enable the user to clearly know the price of the computing instance 110 under the configured specification and the core allocation strategy, the instance configuration apparatus 120 may display, to the user, the price of the computing instance 110 under the specification and the core allocation strategy configured by the user.

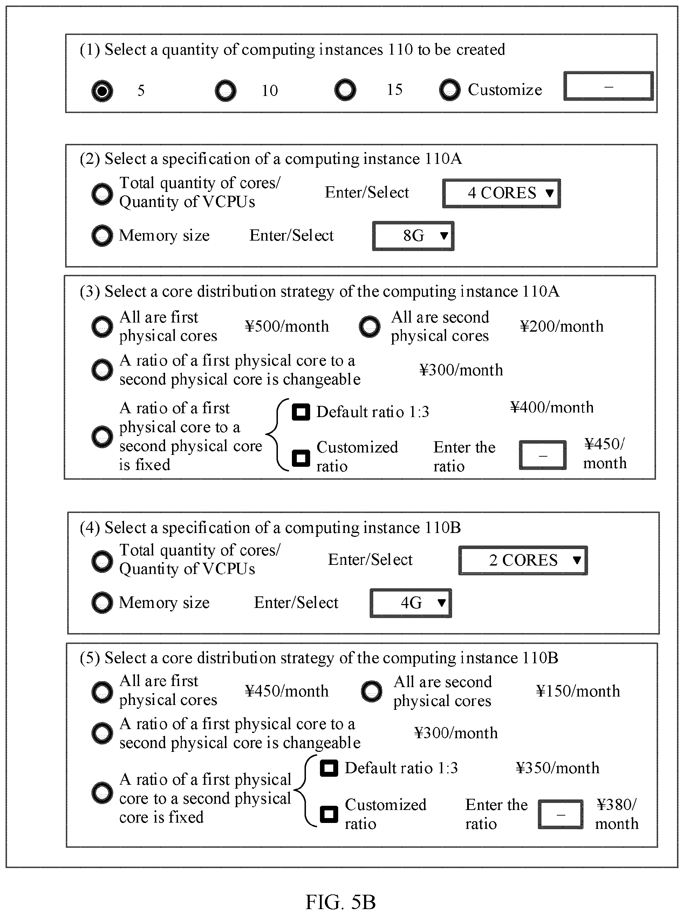

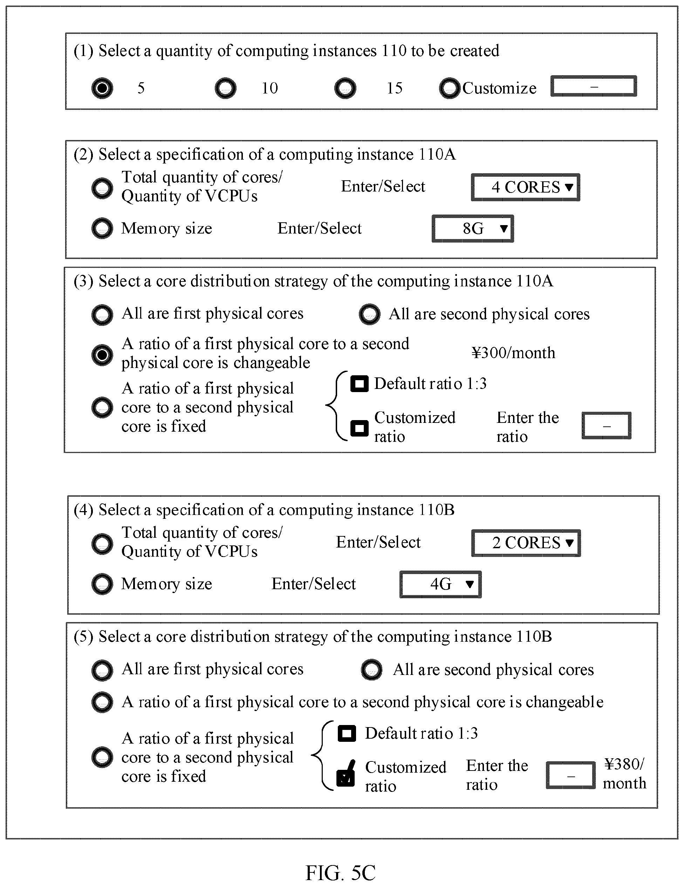

FIG. 5B and FIG. 5C are diagrams of configuration interfaces of the computing instance according to an embodiment of this application. In FIG. 5B and FIG. 5C, after the user selects a specification (for example, the quantity of cores is 4, and the size of the memory is 8G) of the computing instance 110A for the computing instance 110A on the configuration interface of the computing instance 110, the instance configuration apparatus 120 may detect, through the configuration port 121, the specification of the computing instance 110 A selected by the user.

The instance configuration apparatus 120 may compute, based on the specification of the computing instance 110A, prices of the computing instance 110A under the different core allocation strategies, and display, through the configuration port 121, the prices of the computing instance 110A under the different core allocation strategies when the user selects the specification of the computing instance 110A on the configuration interface of the computing instance 110A shown in FIG. 5B If the core allocation strategy indicates that all physical cores are first physical cores, the price is CNY (¥) 500 per month. If the core allocation strategy indicates that all physical cores are second physical cores, the price is CNY 200 per month. When the core allocation strategy indicates that a ratio of the first physical core to the second physical core in the physical cores is changeable, the price is CNY 300 per month. When the core allocation strategy indicates that a ratio of the first physical core to the second physical core in the physical cores is fixed and is a default ratio, the price is CNY 400 per month. When the core allocation strategy indicates that a ratio of the first physical core to the second physical core in the physical cores is fixed and is a customized ratio, the price is CNY 450 per month.

In a manner of displaying the price of the computing instance 110A in FIG. 5B, the user can clearly determine the prices of the computing instance 110A that satisfy the different core allocation strategies under a same specification of the computing instance 110A. This helps the user select the core allocation strategy subsequently. A manner of displaying a price of the computing instance 110B in FIG. 5B is also similar.

Alternatively, the instance configuration apparatus 120 may display the price of the computing instance 110A after the user configures the specification of the computing instance 110A and the core allocation strategy of the computing instance 110A for the computing instance 110A on the configuration interface of the computing instance 110A. For example, when the user selects the specification of the computing instance 110A and the core allocation strategy of the computing instance 110A for the computing instance 110A on the configuration interface of the computing instance 110A, the instance configuration apparatus 120 may display, through the configuration port 121 when the user selects the specification of the computing instance 110A and the core allocation strategy of the computing instance 110A on the configuration interface of the computing instance 110A shown in FIG. 5C, the price of the computing instance 110A that satisfies the specification of the computing instance 110A and the core allocation strategy of the computing instance 110A selected by the user. In a manner of displaying the price of the computing instance 110A in FIG. 5C, after selecting the specification of the computing instance 110A and the core allocation strategy of the computing instance 110A, the user can clearly determine the corresponding price of the computing instance 110A.

For another example, the user sends the creation request to the configuration port 121 in a form of a message like a voice message, a text message (for example, an SMS message), or an email via a mobile terminal of the user. The message like the voice message, the text message (for example, the SMS message), or the email may carry the specification of the computing instance 110 and the core allocation strategy of the computing instance 110.

It should be noted that, in the foregoing descriptions, an example in which the user selects the core allocation strategy and the creation request directly carries the core allocation strategy is used for description. However, during an actual application, the core allocation strategy may be determined based on user information.

For example, a corresponding core allocation strategy is preset for each type of user. For example, for an important user at a high level, a corresponding core allocation strategy set for this type of user is that all physical cores occupied by the computing instance 110 are first physical cores. For a moderate user, a corresponding core allocation strategy set for this type of user is that a ratio of physical cores of two types occupied by the computing instance 110 is a specified value. For a common user, a corresponding core allocation strategy set for this type of user is that all physical cores occupied by the computing instance 110 are second physical cores.

The creation request generated through triggering by the user may carry the user information (for example, an account of the user or an identifier of the user). The instance configuration apparatus 120 may determine a type of the user based on the user information, and then determine a core allocation strategy corresponding to this type of user.

For another example, when the user initially registers with the computing device 100, the user may pre-configure a core allocation strategy. The instance configuration apparatus 120 may store the core allocation strategy pre-configured by the user. When the user requests to create the computing instance 110, the instance configuration apparatus 120 may distribute, according to the pre-configured core allocation strategy, a physical core to the computing instance 110 that the user requests to create.

The foregoing manner of configuring the core allocation strategy is merely an example, and the manner of configuring the core allocation strategy is not limited in embodiments of this application.

In addition, in step 401, an example in which the specification of the computing instance 110 and the core allocation strategy of the computing instance 110 are used as two types of different information that need to be separately configured is used for description. Actually, the core allocation strategy may be used as a part of the specification of the computing instance 110. In other words, the specification of the computing instance 110 can describe quantities of physical cores of different types occupied by the computing instance 110. Optionally, the specification of the computing instance 110 may further describe whether a ratio of physical cores of different types is allowed to change. When configuring the specification of the computing instance 110, the user may complete configuration of the core allocation strategy simultaneously.

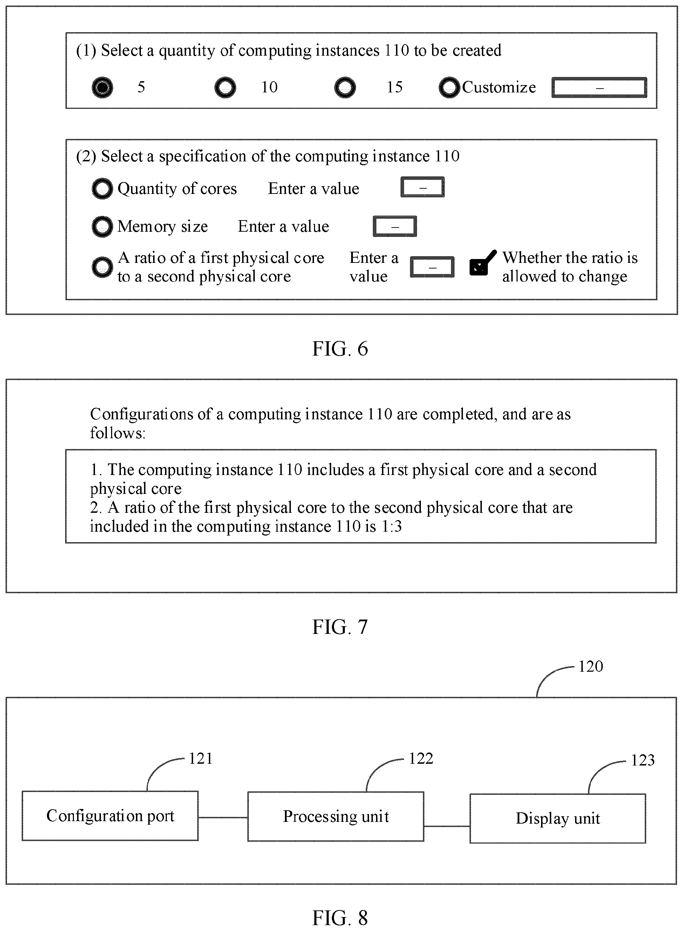

FIG. 6 is a diagram of another configuration interface of the computing instance 110 displayed by the client 200 to the user. The user may select, on the configuration interface of the computing instance 110, a quantity of computing instances 110 that need to be created, and a specification of each computing instance 110. When configuring the specification of the computing instance 110, the user may select, on a configuration interface of the computing instance 110, a quantity of physical cores occupied by the computing instance 110, a ratio of a first physical core to a second physical core, and whether the ratio of the first physical core to the second physical core is allowed to change.

The user may select the specification of the computing instance 110 on the configuration interface of the computing instance 110. The client 200 may generate the creation request by detecting the operation of the user, and send the generated creation request to the instance configuration apparatus 120.

Step 402: The instance configuration apparatus 120 obtains the information about the physical core of the current computing device 100, and distributes the physical core to the computing instance 110 based on the specification of the computing instance 110 and according to the core allocation strategy of the computing instance 110.

After receiving the creation request, the instance configuration apparatus 120 may obtain the information about the physical core of the current computing device 100, and determine the quantities of unoccupied physical cores of different types in the current computing device 100. The instance configuration apparatus 120 determines whether the quantities of unoccupied physical cores of different types in the current computing device 100 support the specification of the computing instance 110 and the core allocation strategy of the computing instance 110.

If the quantities of unoccupied physical cores of different types in the current computing device 100 support the specification of the computing instance 110 and the core allocation strategy of the computing instance 110, that is, a total quantity of the unoccupied physical cores in the current computing device 100 satisfies a total quantity of physical cores required in the specification of the computing instance 110, and the quantities of unoccupied physical cores of different types also satisfy quantities of physical cores of different types required by the core allocation strategy, the instance configuration apparatus 120 distributes the physical core to the computing instance 110 based on the specification of the computing instance 110 and according to the core allocation strategy of the computing instance 110.

The following describes manners in which the instance configuration apparatus 120 distributes the physical cores under the different core distribution strategies by using an example in which a total quantity of cores that required by the computing instance 110 is N (N is a positive integer) and that is described in the specification of the computing instance 110.

Strategy 1: The core allocation strategy indicates that all the physical cores occupied by the computing instance 110 are the first physical cores.

If a virtual processor of the computing instance 110 indicates a hyper-thread of a physical core, that is, the total quantity of cores of the computing instance 110 indicates N hyper-threads required by the computing instance 110, the instance configuration apparatus 120 may select N hyper-threads from unoccupied first physical cores in the current computing device 100. The N hyper-threads are allocated to the computing instance 110, the computing instance 110 is created, and a mapping relationship between the N hyper-threads in the computing instance 110 and the virtual processor in the computing instance 110 is established. The mapping relationship is essentially only a mapping relationship between physical cores on which the N hyper-threads are located and the virtual processor in the computing instance 110.

If the virtual processor of the computing instance 110 indicates a physical core, that is, the total quantity of cores of the computing instance 110 indicates N physical cores required by the computing instance 110, the instance configuration apparatus 120 may select N first physical cores from unoccupied first physical cores in the current computing device 100. The N first physical cores are allocated to the computing instance 110, the computing instance 110 is created, and a mapping relationship between the first physical cores in the computing instance 110 and the virtual processor in the computing instance 110 is established.

The instance configuration apparatus 120 may notify the computing instance 110 of information about the physical cores of different types occupied by the computing instance 110. The information about the physical cores of different types occupied by the computing instance 110 may be quantities of physical cores of different types occupied by the computing instance 110, or may be a computing power value of a physical core of each type occupied by the computing instance 110, or may be a total computing power value of the physical cores occupied by the computing instance 110. A computing power value of a physical core is used to represent a computing capability of the physical core, and the physical cores of different types have different computing power values. Computing power values of the physical cores of different types may be pre-configured. Specific content of the information about the physical cores of different types occupied by the computing instance 110 is not limited in embodiments of this application. Any information that can describe the physical cores of different types occupied by the computing instance 110 is applicable to embodiments of this application.

For example, in strategy 1, the instance configuration apparatus 120 may notify the computing instance 110 that all physical cores occupied by the computing instance 110 are the first physical cores, may further notify the computing instance 110 of a total computing power value of the first physical core occupied by the computing instance 110, and may further notify the computing instance 110 of a computing power value of each first physical core occupied by the computing instance 110. All physical cores that are in the computing instance 110 and that have a mapping relationship with the N virtual processors are the first physical cores. The computing instance 110 may describe the virtual processor based on information about the first physical core. For example, the computing instance 110 may mark computing power values of N virtual cores, and the computing power value of the virtual core is the computing power value of the first physical core.

The instance configuration apparatus 120 notifies the computing instance 110 of information about the physical cores of different types occupied by the computing instance 110, so that the computing instance 110 can obtain that the physical core occupied by the computing instance 110 is the first physical core or obtain a computing power value of the occupied physical core.

Alternatively, the instance configuration apparatus 120 may not notify the computing instance 110 of the quantities of physical cores of different types occupied by the computing instance 110. The computing instance 110 may know only a quantity of virtual cores of the computing instance 110, and does not sense whether the virtual core has a computing capability of the first physical core.

Strategy 2: The core allocation strategy indicates that all physical cores occupied by the computing instance 110 are second physical cores.

A physical core distribution manner in strategy 2 is similar to a physical core distribution manner in strategy 1, and a difference lies in types of physical cores. For details, refer to the foregoing descriptions. Details are not described herein again.

Strategy 3: The core allocation strategy indicates that a ratio of a first physical core to a second physical core occupied by the computing instance 110 is a specified value.

If the virtual processor of the computing instance 110 indicates a hyper-thread of a physical core, that is, the total quantity of cores of the computing instance 110 indicates N hyper-threads required by the computing instance 110, the instance configuration apparatus 120 may select N hyper-threads from the first physical core and the second physical core that are not occupied in the current computing device 100, where physical cores in which the N hyper-threads are located satisfy the ratio indicated by the core allocation strategy. The N hyper-threads are allocated to the computing instance 110, the computing instance 110 is created, and a mapping relationship between the N hyper-threads in the computing instance 110 and the virtual processor in the computing instance 110 is established. The mapping relationship is essentially only a mapping relationship between physical cores on which the N hyper-threads are located and the virtual processor in the computing instance 110.

It should be noted that, for the N hyper-threads selected by the instance configuration apparatus 120, there may be a case in which a plurality of hyper-threads are in a same physical core. In this case, the ratio of the physical cores in which the N hyper-threads are located and that satisfy indication of the core allocation strategy is a ratio of the physical cores in which each hyper-thread is located and that satisfy the indication of the core allocation strategy. In other words, when the ratio is considered, a same physical core in which the plurality of hyper-threads are located needs to be considered as a plurality of physical cores. For example, N is equal to 4, and the ratio is 1:3. In this case, the ratio of the first physical core to the second physical core in which the four hyper-threads are located needs to be equal to 1:3. One hyper-thread needs to be located in the first physical core, and three hyper-threads need to be located in the second physical core. The three hyper-threads may be separately located in three second physical cores. In other words, each second physical core provides one hyper-thread. The three hyper-threads may alternatively be located in two second physical cores. In other words, one second physical core may provide two hyper-threads, and one second physical core may provide one hyper-thread.

If the virtual processor of the computing instance 110 indicates a physical core, that is, the total quantity of cores of the computing instance 110 indicates N physical cores required by the computing instance 110, the instance configuration apparatus 120 may select N physical cores from unoccupied physical cores in the current computing device 100, where the ratio of the first physical core to the second physical core in the N physical cores is the specified value. The N physical cores are allocated to the computing instance 110, the computing instance 110 is created, and a mapping relationship between each physical core in the computing instance 110 and a virtual core in the computing instance 110 is established.

The instance configuration apparatus 120 may notify the computing instance 110 of information about the physical cores of different types occupied by the computing instance 110. The computing instance 110 may clearly know, based on the information about the physical cores of different types occupied by the computing instance 110, which virtual processors of the computing instance 110 have a mapping relationship with the first physical core and which virtual processors have a mapping relationship with the second physical core.

In the computing instance 110, for a virtual processor that has a mapping relationship with the first physical core, the computing instance 110 may describe the virtual processor based on information about the first physical core. For example, the computing instance 110 may mark a computing power value of the virtual processor, and the computing power value of the virtual processor is a computing power value of the first physical core. For a virtual core that has a mapping relationship with the second physical core, the computing instance 110 may describe the virtual processor based on the information about the first physical core. For example, the computing instance 110 may mark a computing power value of the virtual processor, and the computing power value of the virtual processor is a computing power value of the second physical core.

The instance configuration apparatus 120 notifies the computing instance 110 of the information about the physical cores of different types occupied by the computing instance 110, so that the computing instance 110 can sense that the physical cores occupied by the computing instance 110 are physical cores of different types or sense that the occupied physical cores have different computing power values.

Alternatively, the instance configuration apparatus 120 may not notify the computing instance 110 of the quantities of physical cores of different types occupied by the computing instance 110. The computing instance 110 may know only a total quantity of cores of the computing instance 110, and does not sense whether the virtual processor has a computing capability of the first physical core or a computing capability of the second physical core.

Strategy 4: The core allocation strategy indicates that a ratio of a first physical core to a second physical core occupied by the computing instance 110 is allowed to change.

In strategy 4, the instance configuration apparatus 120 may pre-configure an initial ratio. The instance configuration apparatus 120 may select N hyper-threads from unoccupied physical cores in the current computing device 100, and a ratio of a first physical core to a second physical core in physical cores in which the N hyper-threads are located is the initial ratio. Alternatively, the instance configuration apparatus 120 may select N physical cores from unoccupied physical cores in the current computing device 100, and a ratio of a first physical core to a second physical core in the N physical cores is the initial ratio.

After the computing instance 110 is created, the instance configuration apparatus 120 may notify the computing instance 110 of information about the physical cores of different types occupied by the computing instance 110. Similar to that in strategy 3, the computing instance 110 may clearly know, based on the information about the physical cores of different types occupied by the computing instance 110, which virtual processors of the computing instance 110 have a computing capability of the first physical core and which virtual processors have a computing capability of the second physical core.

After the computing instance 110 is created, the instance configuration apparatus 120 may adjust the ratio of the first physical core to the second physical core occupied by the computing instance 110, for example, change the initial ratio of the first physical core occupied by the computing instance 110 to the second physical core occupied by the computing instance 110 to another ratio. In other words, after the computing instance 110 is created, the instance configuration apparatus 120 may adjust a quantity of the first physical cores occupied by the computing instance 110 or a quantity of the second physical cores occupied by the computing instance 110, and reconfigure the ratio of the first physical core occupied by the computing instance 110 to the second physical core occupied by the computing instance 110. For example, when a computing capability of a physical core occupied by the computing instance 110 is insufficient to support a task that needs to be executed by the computing instance 110 (in other words, a computing capability required by the computing instance 110 to execute a task is greater than a computing capability that can be provided by the physical core occupied by the computing instance 110), the instance configuration apparatus 120 may increase the quantity of the first physical cores occupied by the computing instance 110, decrease the quantity of second physical cores, and configure the ratio of the first physical core occupied by the computing instance 110 to the second physical core occupied by the computing instance 110. For another example, when a new computing instance 110 needs to be created on the computing device 100, where a core allocation strategy of the new computing instance 110 indicates that all physical cores occupied by the new computing instance 110 are first physical cores, and a quantity of unoccupied first physical cores in the current computing device 100 is less than a quantity of cores required by a specification of the new computing instance 110, the instance configuration apparatus 120 may reduce the first physical core occupied by the computing instance 110 and increase the second physical core. In this way, the reduced first physical core occupied by the computing instance 110 may be allocated to the new computing instance 110.

When the ratio of the first physical core occupied by the computing instance 110 to the second physical core occupied by the computing instance 110 changes, the instance configuration apparatus 120 may notify the computing instance 110 of information about the physical cores of different types occupied by the computing instance 110 after the ratio changes. The computing instance 110 may clearly know which virtual processors of the computing instance 110 have a computing capability of the first physical core, and which virtual processors have a computing capability of the second physical core. In this way, the computing instance 110 can accurately learn related information of the physical core occupied by the computing instance 110.

After the computing instance 110 is created, the instance configuration apparatus 120 may notify only the computing instance 110 of a maximum value of the quantity of first physical cores that are allowed to be occupied by the computing instance 110. The maximum value of the quantity of first physical cores that are allowed to be occupied by the computing instance 110 indicates a maximum computing capability of the computing instance 110. Therefore, the computing instance 110 clearly knows the maximum computing capability of the computing instance 110.

Alternatively, the instance configuration apparatus 120 may not notify the computing instance 110 of the quantities of physical cores of different types occupied by the computing instance 110 or the maximum value of the quantity of first physical cores that are allowed to be occupied by the computing instance 110. The computing instance 110 may know only a quantity of virtual cores of the computing instance 110, and does not sense whether the virtual core has a computing capability of the first physical core or a computing capability of the second physical core.

Step 403: The instance configuration apparatus 120 displays a configuration sheet to the user through the configuration port 121, where the configuration sheet includes types of cores included in the computing instance 110 and a quantity of cores of each type. In other words, the configuration sheet describes the type of the physical core occupied by the computing instance 110 and the quantity of physical cores of the types occupied by the computing instance 110.

The instance configuration apparatus 120 distributes a physical core to the computing instance 110. After the computing instance 110 is created, the instance configuration apparatus 120 may notify the user that the computing instance 110 is created, and notify the user of information about a core included in the created computing instance 110. The information about the core included in the computing instance 110 includes but is not limited to: the type of the physical core occupied by the computing instance 110, the quantity of physical cores of each type occupied by the computing instance 110, and a ratio of physical cores of the types occupied by the computing instance 110.

There are many manners in which the instance configuration apparatus 120 displays the configuration to the user through the configuration port 121. For example, the instance configuration apparatus 120 displays the configuration sheet to the user on a client 200 through the configuration port 121. After the user selects, on the configuration interfaces of the computing instance 110 shown in the diagrams in FIG. 5A to FIG. 5C, the specification and the core allocation strategy for the computing instance 110 that needs to be created, the instance configuration apparatus 120 may configure the computing instance 110 based on the specification and according to the core allocation strategy selected by the user. After the computing instance 110 is configured, the instance configuration apparatus 120 displays the configuration sheet on the client 200 through the configuration port 121. FIG. 7 is a diagram of a page of a configuration sheet displayed by a client 200 to a user. In FIG. 7, the page may display the configured computing instance 110, may display a configuration sheet of each configured computing instance 110, and may display types of cores included in the computing instance 110 and a ratio of the cores of the types.

For another example, when the user sends a creation request to the configuration port 121 in a form of a message like a voice message, a text message (for example, an SMS message), or an email via a mobile terminal of the user, the instance configuration apparatus 120 may send a message to the mobile terminal of the user in a same manner after configuring the computing instance 110 based on the specification and according to the core allocation strategy selected by the user. In other words, the instance configuration apparatus 120 may send messages such as the voice message, the text message (for example, the SMS message), or the email to the mobile terminal of the user through the configuration port 121, where these messages may carry the configuration sheet of the computing instance 110.

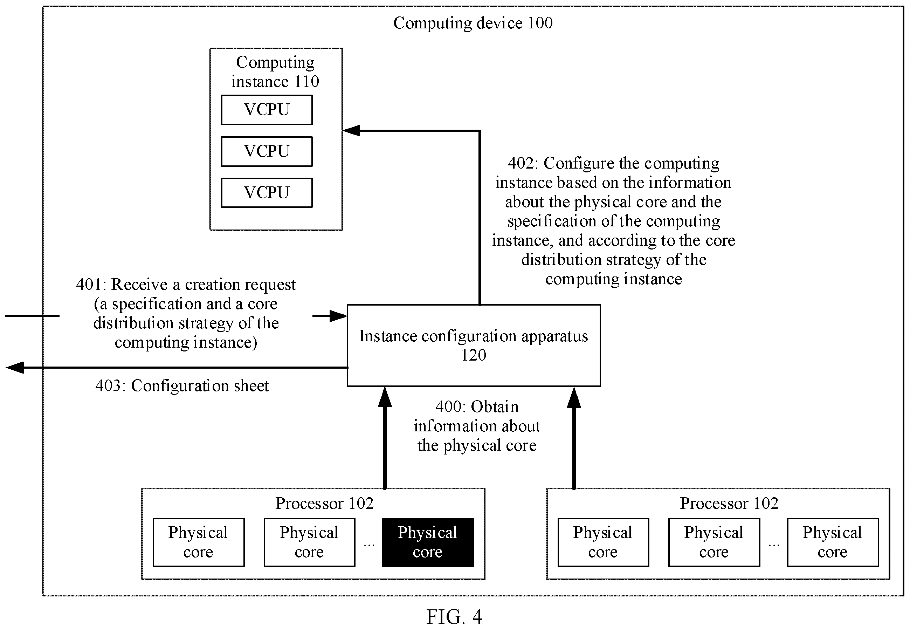

Based on a same inventive concept as the method embodiment, an embodiment of this application further provides an instance configuration apparatus, configured to perform the method performed by the instance configuration apparatus in the method embodiment shown in FIG. 4. For related features, refer to the foregoing method embodiment. Details are not described herein again. FIG. 8 shows an instance configuration apparatus according to an embodiment of this application. The instance configuration apparatus 120 includes a configuration port 121 and a processing unit 122. Optionally, the instance configuration apparatus 120 further includes a display unit 123.

The configuration port 121 is configured to receive a creation request of a user, where the creation request includes a specification of a computing instance and a core allocation strategy of the computing instance, the specification of the computing instance indicates a total quantity of cores included in the computing instance, and the core allocation strategy of the computing instance indicates a type of a core included in the computing instance. In embodiments of this application, the total quantity of cores included in the computing instance is a total quantity of virtual processors in the computing instance. The type of the core included in the computing instance is a type of the physical core that is in the computing instance and that has a mapping relationship with the virtual processor.

The processing unit 122 is configured to configure the computing instance based on the specification of the computing instance and according to the core allocation strategy of the computing instance.

In a possible implementation, the computing instance that the user requests to create may include cores of one or more types. When the computing instance includes cores of a plurality of types, the core allocation strategy further indicates a quantity of cores of each of the plurality of types or a first ratio.

In a possible implementation, when the processing unit 122 configures the computing instance based on the specification of the computing instance and according to the core allocation strategy of the computing instance, if the core allocation strategy indicates the quantity of cores of each of the plurality of types or the first ratio, the processing unit 122 may configure the computing instance based on the quantity of cores of each of the plurality of types or the first ratio included in the core allocation strategy. If the core allocation strategy does not indicate the quantity of cores of each of the plurality of types or the first ratio, or the core allocation strategy indicates the quantity of cores of each of the plurality of types or the first ratio, and the quantity of cores of each of the plurality of types or the first ratio is allowed to change, the instance configuration apparatus may configure the computing instance based on a second ratio different from the first ratio, or may configure the computing instance based on a quantity of cores of each type different from that included in the core allocation strategy.

In a possible implementation, the apparatus further includes the display unit 123. The display unit 123 computes a price of the computing instance based on the specification of the computing instance and according to the core allocation strategy of the computing instance, and displays the price to the user through a configuration port 121.

In a possible implementation, the display unit 123 displays a configuration sheet to the user through the configuration port 121, where the configuration sheet includes the types of cores included in the computing instance and the quantity of cores of each type.

It should be noted that, in embodiments of this application, division into the units is an example, and is merely a logical function division. In actual implementation, another division manner may be used. Function units in embodiments of this application may be integrated into one processing unit, each of the units may exist alone physically, or two or more units may be integrated into one unit. The integrated unit may be implemented in a form of hardware, or may be implemented in a form of a software function unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, all or some of the procedures or functions according to embodiments of the present invention are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive (solid-state drive, SSD).

A person skilled in the art should understand that embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

The computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to this application without departing from the spirit and scope of this application. This application is intended to cover these modifications and variations of this application provided that they fall within the scope of protection defined by the claims of this application and their equivalent technologies.

## Claims

1. An instance configuration method, wherein the method comprises:
providing a configuration port, wherein the configuration port is configured to receive a creation request of a user, the creation request comprises a specification of a computing instance and a core allocation strategy of the computing instance, the specification of the computing instance indicates a total quantity of cores comprised in the computing instance, and the core allocation strategy of the computing instance indicates a type of a core comprised in the computing instance; and
configuring the computing instance based on the specification of the computing instance and according to the core allocation strategy of the computing instance.

2. The method according to claim 1, wherein the computing instance comprises cores of a plurality of types, and the core allocation strategy further indicates a quantity of cores of each of the plurality of types or a first ratio.

3. The method according to claim 2, wherein the configuring the computing instance based on the specification of the computing instance and according to the core allocation strategy of the computing instance comprises:
configuring the computing instance based on the first ratio comprised in the core allocation strategy; or
configuring the computing instance based on a second ratio different from the first ratio.

4. The method according to any one of claims 1 to 3, wherein the method further comprises:
computing a price of the computing instance based on the specification of the computing instance and according to the core allocation strategy of the computing instance; and
displaying the price to the user through the configuration port.

5. The method according to any one of claims 1 to 4, wherein the method further comprises:
displaying a configuration sheet to the user through the configuration port, wherein the configuration sheet comprises the types of the cores comprised in the computing instance and the quantity of cores of each type.

6. An instance configuration apparatus, wherein the apparatus comprises:
a configuration port, configured to receive a creation request of a user, wherein the creation request comprises a specification of a computing instance and a core allocation strategy of the computing instance, the specification of the computing instance indicates a total quantity of cores comprised in the computing instance, and the core allocation strategy of the computing instance indicates a type of a core comprised in the computing instance; and
a processing unit, configured to configure the computing instance based on the specification of the computing instance and according to the core allocation strategy of the computing instance.

7. The apparatus according to claim 6, wherein the computing instance comprises cores of a plurality of types, and the core allocation strategy further indicates a quantity of cores of each of the plurality of types or a first ratio.

8. The apparatus according to claim 7, wherein when configuring the computing instance based on the specification of the computing instance and according to the core allocation strategy of the computing instance, the processing unit is configured to:
configure the computing instance based on the first ratio comprised in the core allocation strategy; or
configure the computing instance based on a second ratio different from the first ratio.

9. The apparatus according to any one of claims 6 to 8, wherein the apparatus further comprises a display unit, wherein
the display unit is configured to: compute a price of the computing instance based on the specification of the computing instance and according to the core allocation strategy of the computing instance; and display the price to the user through the configuration port.

10. The apparatus according to any one of claims 6 to 9, wherein the display unit is further configured to:
display a configuration sheet to the user through the configuration port, wherein the configuration sheet comprises the types of the cores comprised in the computing instance and the quantity of cores of each type.

11. A computing device, comprising a memory and a processor, wherein the memory stores program instructions, and the processor runs the program instructions to perform the method according to any one of claims 1 to 5.

12. A computer-readable storage medium, wherein the computer-readable storage medium stores instructions, and when the instructions are run on a computer, the computer is enabled to perform the method according to any one of claims 1 to 5.
